(19) Europäisches Patentamt
European Patent Office
Office européen des brevets

(11) **EP 0 845 112 B1**

(12) **EUROPEAN PATENT SPECIFICATION**

(45) Date of publication and mention
of the grant of the patent:
**23.10.2002  Bulletin 2002/43**

(51) Int Cl.[7]: **G02B 21/00**, G02B 21/06,
G02B 21/36, G02B 27/46,
G02B 17/00, G02B 5/08,
G02B 5/10

(21) Application number: **96926861.4**

(22) Date of filing: **05.08.1996**

(86) International application number:
**PCT/US96/12637**

(87) International publication number:
**WO 97/006461 (20.02.1997 Gazette 1997/09)**

(54) **REFLECTING MICROSCOPE DEVICE**

REFLEKTIERENDE MIKROSKOPVORRICHTUNG

MICROSCOPE REFLECHISSANT

(84) Designated Contracting States:
**CH DE FR GB IT LI NL**

(30) Priority: **07.08.1995  US 2010 P**
**14.08.1995  US 2684 P**
**18.07.1996  US 683717 P**

(43) Date of publication of application:
**03.06.1998  Bulletin 1998/23**

(73) Proprietor: **Tomey Co., Ltd.**
**Nagoya (JP)**

(72) Inventor: **MAMMONE, Richard, J.**
**Bridgewater, NJ 08807 (US)**

(74) Representative: **Dubois-Chabert, Guy et al**
**BREVALEX**
**3, rue du Docteur Lanceraux**
**75008 Paris (FR)**

(56) References cited:
**SU-A- 1 675 827**   **US-A- 2 212 211**
**US-A- 2 628 533**   **US-A- 4 832 447**
**US-A- 4 974 094**   **US-A- 5 144 495**
**US-A- 5 144 496**

**Description**

Background of the Invention

In a conventional optical microscope, magnifying power is determined by multiplying the magnification of the ocular (eyepiece) by the magnification of the objective. For example, a low-power objective might have a magnification of 4x and a high-power oil-immersion objective 100x. If each is used with an ocular of 10x magnifying power, magnifications of 40x and 1,000x are obtained. The smallest object that can be seen in an optical microscope is limited by the wave character of light to a size of the order of one light wavelength. The numerical aperture (NA) of a lens is given by $\eta \sin \theta$, where $\theta$ is the half-angle of the cone of light accepted by the objective lens and $\eta$ is the refractive index of the medium between the specimen and the lens. The resolution of a microscope is defined as the limiting distance at which two points can be separated and still be resolved as two separate points. Lord Rayleigh showed this distance to be

$$d_A = 1.22 \frac{\lambda_0}{NA_{obj} + NA_{cond}} \qquad (1)$$

where $\lambda_0$ is the wavelength of light in air, $NA_{obj}$ and $NA_{cond}$ are the numerical apertures of the objective and condenser lenses, respectively. From the above equation it is obvious that it is necessary for the lens system to have a large numerical aperture if good resolution is desired. According to Abbe, the limit of detail resolution of a diffraction-limited microscope is reached when the numerical aperture of the objective lens is large enough to capture the first-order diffraction pattern produced by the detail at the wavelength employed. Under optimal conditions, using Koehler illumination and an oil-immersion lens, in which a drop of oil is placed on the specimen slide and the lens is dipped into the drop, objects as small as 200 nm ($0.2 \times 10^{-6}$ meters) can be resolved with a magnification of about 1,000X.

Where, however, the amount of light that can be focused on the specimen is limited to that which the specimen can withstand, such as during an ophthalmological examination of the cornea, it not possible to achieve nearly as good magnification or resolution. Using the technique of illuminating only a small portion of the specimen at a time, but with a high-intensity, narrow, light beam which is sequentially scanned across the field, conventional slit lamp microscopes are able to provide magnification in the range of 40-60x. The narrowness of the beam limits the number of photons reaching the specimen at any one time. Both the slit lamp microscope and the tandem scanning reflected light microscope rely on this successive illumination technique which requires that the object remain stationary during the entire time that it is being sequentially illuminated. It would be desirable to obtain comparable magnification without, however, requiring the object to remain stationary for the entire image acquisition process, would not limit the illumination of the object and which could achieve a good magnification and resolution.

Summary of the Invention

In accordance with the principles of my invention, in one illustrative embodiment thereof, I provide a microscope which acquires a real, three-dimensional image of the specimen without requiring a high-intensity light beam to be physically scanned across the specimen object. The three-dimensional reflecting microscope of my invention has a high effective numerical aperture (NA) which is achieved by the use of two, large-diameter, facing concave mirrors sharing a common optical axis. Each of the mirrors has an aperture at its vertex, the point where the mirrored surface is cut by the optical axis. The specimen object is placed at the aperture of one of the mirrors and a video camera is placed at the aperture of the other mirror. The diameter of the mirrors is sufficiently large compared to the specimen that substantially all of the light leaving the specimen is captured by the mirrors and focused upon the camera. The acquired image is electronically stored and processed by computer. Because the image is a three-dimensional image and because of the high effective numerical aperture of the system which provides for good resolution in depth, the image acquired by moving the camera to different positions along the optical axis can simulate sectioning at different depths of the specimen object. In the illustrative embodiment, both mirrors are confocal and of the same diameter and, by themselves, provide only unity magnification. Magnification of the image is introduced by the spacing of the sensors of the video camera sensor array. Since the three-dimensional reflecting microscope receives a large cone of light from the object (i.e., has a high NA), the video camera requires a minimal amount of time to acquire the image. With exemplary CCD sensor spacing of 10 microns, resolution of about 10 microns ($10^{-5}$ meters) is achievable using commercial 8" diameter concave mirrors. The high numerical aperture of the reflecting microscope offers the advantages of being able to acquire an image more rapidly at a lower light level than is possible with a slit lamp microscope, which requires that the object be physically scanned with a high intensity light.

Further in accordance with the illustrative embodiment, the instrument is calibrated by measuring the light intensity at points throughout the 3-D image produced by a physically realized point source of light positioned in the object space. A fast Fourier transform of the array of light intensity values is taken and divided by the fast Fourier transform of the array of theoretical light intensity values that should be produced by a similarly positioned true pinpoint source to yield the point spread function of the mirror system Knowing the point spread function of the mirror system, the image obtained from an actual specimen may be corrected for the presence of adjacent artifacts by multiplying the intensity of each pixel of interest in the image by an appropriate correction factor, i.e., a superposition of the neighboring pixels weighted by their point spread function.

Because a pinhole in a substrate having a finite thickness will emit a light beam having a cone angle that might not be sufficient to illuminate the surface of the large mirrors, steps must be taken during the calibration process to provide an effective pinhole source that will illuminate as much of the mirrors' surface as possible. Accordingly, it is advantageous to employ a pinhole light source together with a diffusing membrane at the pinhole's entrance to ensure that light from many different angles passes through the pinhole. Using a diffusing membrane at the entrance of a 10 micron diameter hole in a 2.5 micron thick substrate in front of a collimated light source produces an emerging light beam having a cone angle of approximately 90 degrees, thereby adequately covering the mirrors' surface. In this manner, when an actual specimen is positioned in the object aperture, the point spread function obtained of the system will have sufficient data so that the acquired image of the specimen may adequately be corrected.

As an alternative, the collimated light beam may be passed through a high numerical aperture microscope objective (such as a 40X lens having an NA $\cong$ 0.65) positioned in the object space so as to produce an emerging light beam having a large enough cone angle, e.g., in excess of approximately 81 degrees, to cover most of the mirrors' surfaces.

As an additional alternative, instead of using a 10 micron pinhole light source, a somewhat larger 100 micron diameter spot on a diffuse surface that is sequentially positioned throughout the specimen space may be employed and the reflected light therefrom incident on the pixels of the CCD array measured.

The effective pinhole source is then sequentially positioned throughout the maximum length, breadth and depth of the volume of the object space for which the mirror system is designed and the light incident on the plane of sensors of the camera array positioned at various image distances in the image space is measured.

Brief description of the drawing:

The foregoing and other objects and features are achieved in the illustrative embodiment shown in the drawing, in which:

Fig. 1 is a partial isometric view of the confocal reflecting microscope system of my invention;

Fig. 2a is a schematic section taken through the Y-Z plane of Fig. 1;

Fig. 2b illustrates the geometry of the maximum cone of light that can be captured by the mirror system of Fig. 1, while Fig. 2c shows the maximum cone of light capturable by the objective lens of a conventional microscope;

Fig. 3 is a schematic representation of an illustrative, 3-dimensional sectioned image of an eye obtained by variously positioning camera 50 along the Z-axis of Fig. 1; and

Fig. 4 is a flow chart of the calibration process for removing the effects of reflected and scattered light from points adjacent to the point desired to be observed in the specimen.

General Description:

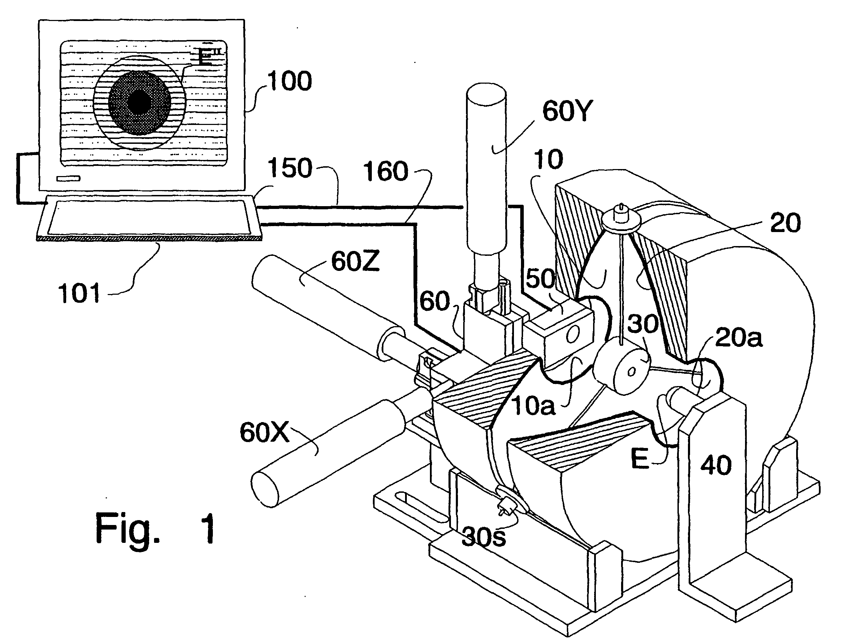

Referring to Fig. 1 the confocal microscope of my invention is seen to be comprised of two facing concave mirrors, 10, 20 having their optical axes co-axially aligned. Each mirror has a respective aperture 10a, 20a at the apex of its curved surface. Positioned intermediate mirrors 10 and 20 is a spider support structure 30s which carries lamp 30 for illuminating an object which is positioned on stage 40 so as to be within aperture 20a of mirror 20. Positioned within aperture 10a of mirror 10 is a video camera 50 mounted on 3-axis movable stage 60. The position of camera 50 is adjustable by means of vernier drives 60X, 60Y and 60Z which move camera 50 in the x, y, and z directions, respectively, to correctly align the camera on the optical axis. Under the control of signals delivered over cable 160 from computer 101, camera 50 will then be moved along the Z axis to acquire images at various depths.

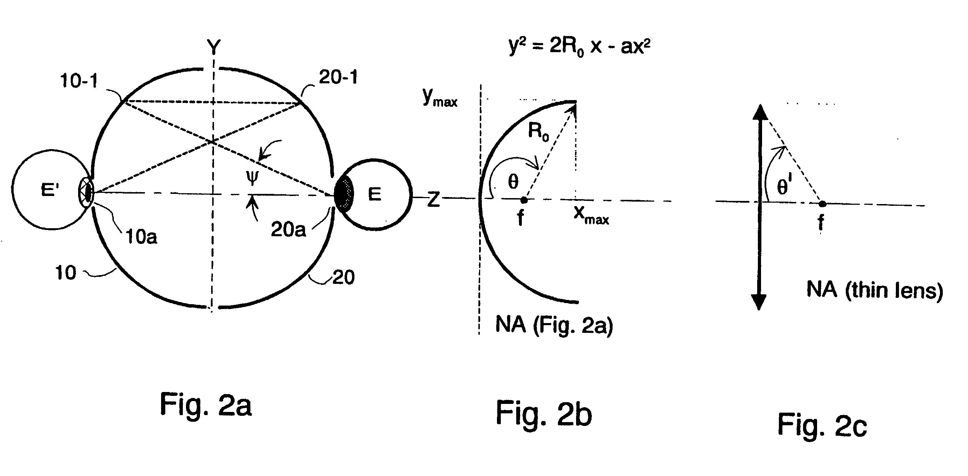

Referring now to Fig. 2a, there is shown a schematic section taken through the Y-Z plane of Fig. 1 with the object E positioned in aperture 20a of mirror 20. A single arbitrary ray trace has been shown in dotted lines drawn from the object E toward mirror 10 at an upwardly oblique angle $\psi$ towards the left where it is reflected by mirror 10 at point 10-1. Mirror 10 reflects this ray back toward mirror 20 parallel to the optical Z-axis striking mirror 20 at point 20-1, where it is reflected toward aperture 10a of mirror 10. As shown in US patent 2,628,533, facing confocal mirrors are capable of forming a real image of an object. Accordingly, at aperture 10a, a real image E' appears of object E.

This image E' is acquired by camera 50 and, as shown in Fig. 1 transmitted over cable 150 to computer 101 where it is processed and applied to be magnified on the screen of computer monitor 100. The degree of magnification is dependent upon the spacing of the sensor elements (not shown) in camera 50. With exemplary CCD sensor spacing of 10 microns, resolution of about 10 microns ($10^{-5}$ meters) is achievable using commercial 8" diameter concave mirrors. The high numerical aperture of the reflecting microscope offers the advantages of being able to more rapidly acquire an image at a lower light level than is possible with a slit lamp microscope which requires that the object be physically scanned with a high intensity light. The numerical aperture of the concave mirror system 10, 20 is determined by the half angle of the cone of light accepted from the objective multiplied by the refractive index $\eta$ of the medium between the specimen and the lens.

In Fig. 2b the geometry of the mirror system is illustrated for a mirror of generic curvature and having a maximum depth and height $x_{max}$ and $y_{max}$, respectively, and the focus at $f$. As noted above, the numerical aperture NA is determined by the sine of the half-angle of the cone of light that can be captured, $\eta \sin \theta$. The lateral resolution of the concave mirror system 10, 20 is proportional to the NA while axial resolution is proportional to $NA^2$. From the geometry of the mirrors, the sine of the angle $\theta$ when $\theta = \theta_{max}$ is given by:

$$Sin\ \theta_{max} = \frac{y_{max}}{\sqrt{(f - x_{max})^2 + y_{max}^2}} \qquad (2)$$

In general, the equation for the curvature of a section is given by:

$$y^2 = 2R_0 x - ax^2 \qquad (3)$$

where $R_0$ is the apical radius and $a$ is the shape factor of a mirror. For a spherical mirror, $a = 1$ and for a parabolic mirror, $a = 0$. In the illustrative embodiment the radius $y_{max}$ of mirrors 10, 20 are each approximately 4 inches, $f = 3.5$ inches and $x_{max} = 3$, yielding an NA of approximately 0.99. It should be noted that the maximum angle $\theta_{max}$, which is a measure of the cone of light that can be captured by the concave mirror of Fig. 2b, may be larger than 90°. For purposes of contrast, Fig. 2c shows that the maximum value of the angle $\theta$ that is obtainable using the refractive optics of a conventional microscope's objective lens can never exceed 90°.

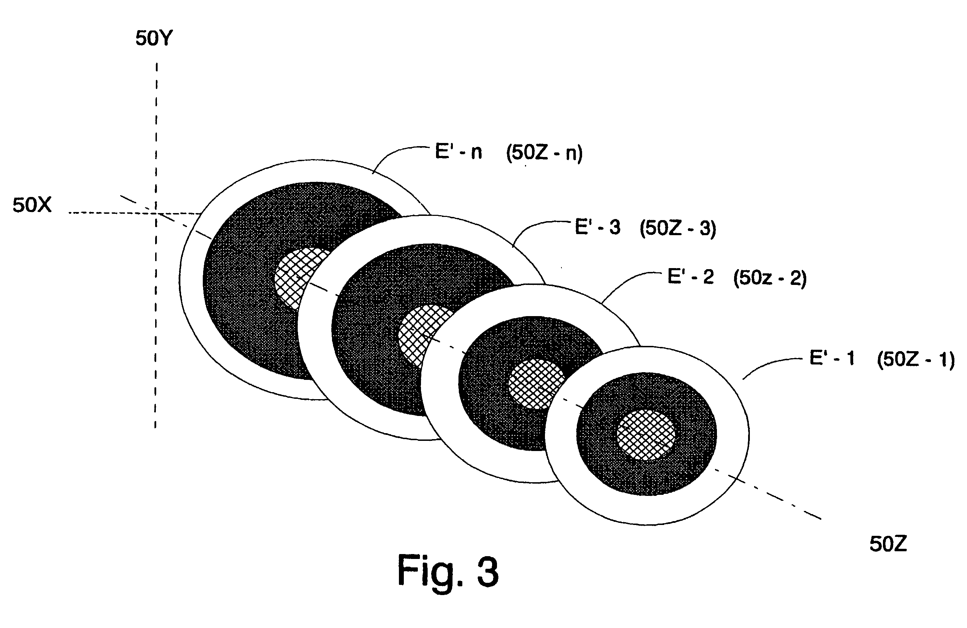

Referring now to Fig. 3, sections of the real, three-dimensional image E' appearing at aperture 10a are shown. Adjustment of verniers 60X, 60Y and 60Z of the apparatus of Fig. 1 positions camera 50 to intercept any particular feature throughout the length, breadth or depth of the image E' which is, of course, equivalent to sectioning through the real object E. This is particularly advantageous, for example, in examining a transparent tissue sample for artifacts which may exist anywhere throughout the depth of the specimen. Four different positions of camera 50 along the Z-axis are shown in Fig. 3 at 50Z-1, 50Z-2, 50 Z-3, ... 50Z-n which intercept four different planes or layers E'-1 through E'-n in the image.

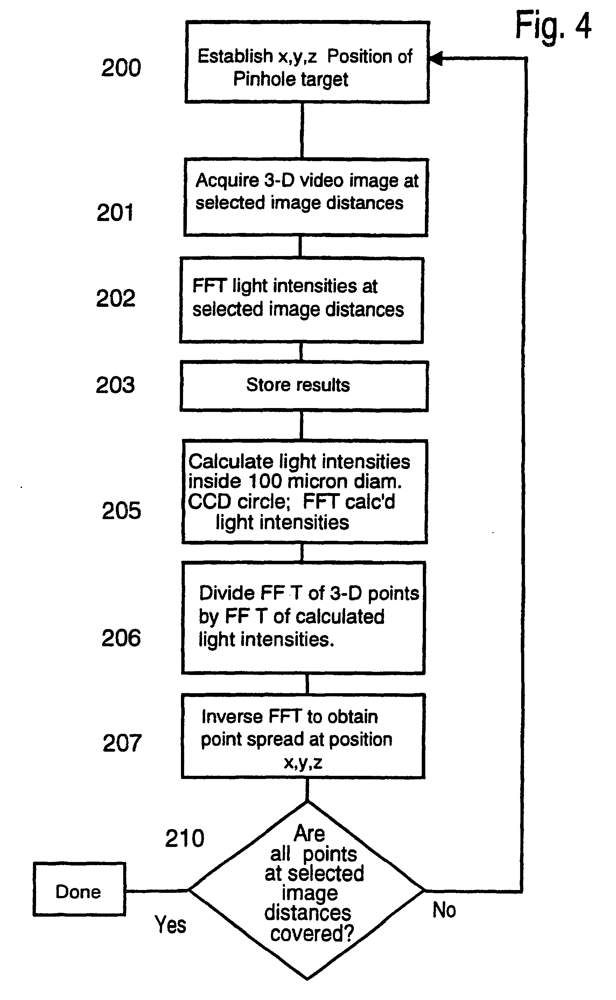

Referring now to Fig. 4 there is shown a flow chart for calibrating the confocal microscope of Fig. 1. A pinhole light source is placed on stage 40 and its position is carefully noted in step 200. In step 201, computer 101 controls movable stage 60 over cable 160 so that camera 50 is sequentially positioned to record light values throughout the 3-D image space at aperture 10a. The stage 40 is then moved to re-position the pinhole light source to another x, y, z point in the object space and camera 50 is again positioned to record light values throughout the 3-D image space.

The process continues until camera 50 acquires a complete video record which is passed to computer 101 over cable 150.

In step 202 computer 101 performs a fast Fourier transform (FFT) of the information obtained from the step 201, and stores the results in step 203. In step 205 the theoretical light intensities that would be produced inside an illustrative 100 $\mu$ diameter circle on the pixels of the CCD array of camera 50 by a theoretically perfect pinhole source at B are calculated and an FFT of these light intensities is performed.

In step 206 the stored FFT values obtained from step 203 are divided by the FFT of the theoretical light intensities. In step 207 the inverse FFT of the values obtained from step 206 is calculated to obtain the point spread function. In step 210 the process calls for repeating the above steps if not all of the desiced x, y, z positions for object E have been processed. In this manner the complete point spread function of the apparatus is obtained so that when any desired sample is placed on stage 40, the image acquired by camera 50 can be corrected depending upon which position of the image is then being examined.

What has been described is deemed to be illustrative of the principles of my invention. Numerous modifications may be made thereto, such as increasing the illumination of the object by moving lamp 30 outside the enclosure and replacing the lamp by a 45° half-silvered minor. In addition, lamp 30 may also be replaced by an external "slit lamp" or scanning illumination source. Moreover, computer 101 may be programmed to address one line of pixels in camera 50 at a time while the camera is moved throughout the 3-D image space. In addition, camera 50 may be implemented using any form of video capture device including, without limitation, CCD, metal oxide silicon (MOS), CID, vidicon or the like. Other modifications may be made by those skilled in the art without, however, departing from the spirit and scope of my invention.

## Claims

1. A microscope comprising:

   first and second optical elements having respectively first and second concave reflective surfaces facing each other along an optical axis, each of said surfaces having a center opening at said optical axis,

**characterized in that**

said microscope is a large numerical aperture microscope,

said surfaces are aligned so that most of the light rays from an object placed near the opening of said first surface is imaged at said opening of said second surface to form a series of sectional images thereat; and further comprising

means for positioning said object at said aperture of said first surface;

means for positioning an image acquisition device at said aperture of said second surface,

means for moving said image acquisition device along said optical axis to scan through said series of sectional images, and

means for analyzing the series of sectional images acquired by said image acquisition device at predetermined axial depths along said optical axis.

2. The microscope of claim 1 wherein said means for analyzing said image includes a digital computer programmed for processing the light intensities existing at said predetermined axial depths of said series of sectional images.

3. The microscope of claim 2 wherein said image acquisition device contains a planar array of sensors for ascertaining said light intensities at said predetermined axial depths of said series of sectional images.

4. The microscope of claim 3 wherein said sensors are selected from the group comprising charge-coupled devices, metal oxide silicon (MOS) devices, CID devices or vidicon devices.

5. The microscope of claim 3 wherein said processing of said light intensities includes means for comparing the Fourier transform of light intensities imaged at said axial depths from a specimen object with the Fourier transform of light intensities imaged at said axial depths from a point source of light positioned at said center opening of said first optical element.

6. The microscope of claim 5 wherein said processing includes correcting said acquired image by removing therefrom light values failing to correspond with the light values imaged from said point source.

7. The microscope of claim 3 wherein said microscope includes calibrating elements including a source of a point of light located in said center opening of said first optical element and wherein said means for analyzing said acquired image includes a stored program computer for storing the light intensities in the plane perpendicular to the optic axis at each of said predetermined depths.

**Patentansprüche**

1. Mikroskop mit:

ersten und zweiten optischen Elementen mit betreffenden ersten und zweiten konkaven reflektierenden Oberflächen, die einander entlang einer optischen Achse zugewandt sind, wobei jede der Oberflächen eine zentrale Öffnung an der optischen Achse aufweist,

**dadurch gekennzeichnet, daß**
das Mikroskop ein Mikroskop mit großer numerischer Apertur ist,

wobei die Oberflächen so ausgerichtet sind, daß der Großteil der Lichtstrahlen von einem nahe der Öffnung der ersten Oberfläche plazierten Objekt an der Öffnung der zweiten Oberfläche abgebildet wird, um eine Reihe von Sektionsbildern auf dieser zu bilden, und ferner umfaßt:

Mittel zum Positionieren des Objekts an der Apertur der ersten Oberfläche,
Mittel zum Positionieren einer Bilderfassungsvorrichtung an der Apertur der zweiten Oberfläche,
Mittel zum Bewegen der Bilderfassungsvorrichtung entlang der optischen Achse, um die Reihe von Sektionsbildern abzutasten, und
Mittel zum Analysieren der Reihe von durch die Bilderfassungsvorrichtung erfaßten Sektionsbildern an vorbestimmten axialen Tiefen entlang der optischen Achse.

2. Mikroskop nach Anspruch 1, wobei die Mittel zum Analysieren des Bildes einen digitalen Computer umfassen, der zum Verarbeiten der Lichtintensitäten programmiert ist, die an den vorbestimmten axialen Tiefen der Reihe von Sektionsbildern bestehen.

3. Mikroskop nach Anspruch 2, wobei die Bilderfassungsvorrichtung eine planare Anordnung von Sensoren zum Bestimmen der Lichtintensitäten an den vorbestimmten axialen Tiefen der Reihe von Sektionsbildern enthält.

4. Mikroskop nach Anspruch 3, wobei die Sensoren aus der Gruppe ausgewählt sind, welche ladungsgekoppelte Vorrichtungen, Metalloxid-Silizium-Vorrichtungen bzw. MOS-Vorrichtungen, CID-Vorrichtungen oder Vidicon-Vorrichtungen umfaßt.

5. Mikroskop nach Anspruch 3, wobei die Verarbeitung der Lichtintensitäten Mittel zum Vergleichen der FourierTransformation von an den axialen Tiefen abgebildeten Lichtintensitäten von einem Probeobjekt mit der FourierTransformation von an den axialen Tiefen von einer an der zentralen Öffnung des ersten optischen Elements positionierten Punkt-Lichtquelle abgebildeten Lichtintensitäten umfaßt.

6. Mikroskop nach Anspruch 5, wobei die Verarbeitung ein Korrigieren des erfaßten Bildes umfaßt, indem von diesem Lichtwerte entfernt werden, welche den von der Punktlichtquelle abgebildeten Lichtwerten nicht entsprechen.

7. Mikroskop nach Anspruch 3, wobei das Mikroskop Kalibrierelemente mit einer Punkt-Lichtquelle, die in der zentralen Öffnung des ersten optischen Elements gelegen ist, aufweist, und wobei die Mittel zum Analysieren des erfaßten Bildes einen Speicherprogramm-Computer zum Speichern der Lichtintensitäten in der Ebene senkrecht zu der optischen Achse an jeder der vorbestimmten Tiefen umfassen.

## Revendications

1. Microscope comprenant :

> des premier et second éléments optiques ayant respectivement des première et seconde surfaces réfléchissantes concaves en face l'une de l'autre le long d'un axe optique, chacune desdites surfaces ayant une ouverture centrale au niveau dudit axe optique,

> **caractérisé en ce que**
> ledit microscope est un microscope à grande ouverture numérique,
> lesdites surfaces sont alignées de telle sorte que la plupart des rayons lumineux provenant d'un objet placé près de l'ouverture de ladite première surface soient imagés au niveau de ladite ouverture de ladite seconde surface pour former une série d'images en coupe au niveau de celle-ci ; et comprenant en outre
> des moyens pour positionner ledit objet au niveau de ladite ouverture de ladite première surface ;
> des moyens pour positionner un dispositif d'acquisition d'image au niveau de ladite ouverture de ladite seconde surface,
> des moyens pour déplacer le dispositif d'acquisition d'image le long dudit axe optique pour balayer à travers ladite série d'images en coupe, et
> des moyens pour analyser la série d'images en coupe acquises par ledit dispositif d'acquisition d'image au niveau de profondeurs axiales déterminées le long dudit axe optique.

2. Microscope de la revendication 1 dans lequel lesdits moyens pour analyser ladite image comprennent un ordinateur numérique programmé pour traiter les intensités lumineuses existant au niveau desdites profondeurs axiales prédéterminées de ladite série d'images en coupe.

3. Microscope de la revendication 2 dans lequel ledit dispositif d'acquisition d'images contient un réseau plan de capteurs pour vérifier lesdites intensités lumineuses au niveau desdites profondeurs axiales prédéterminées de ladite série d'images en coupe.

4. Microscope de la revendication 3 dans lequel lesdits capteurs sont sélectionnés à partir du groupe comprenant des dispositifs à transfert de charge, des dispositifs MOS, des dispositifs CID ou des dispositifs vidicon.

5. Microscope de la revendication 3 dans lequel ledit traitement desdites intensités lumineuses comprend des moyens de comparaison de la transformée de Fourier d'intensités lumineuses imagées au niveau desdites profondeurs axiales provenant d'un objet type avec la transformée de Fourier d'intensités lumineuses imagées au niveau desdites profondeurs axiales provenant d'une source ponctuelle de lumière positionnée au niveau de ladite ouverture centrale dudit premier élément optique.

6. Microscope de la revendication 5 dans lequel ledit traitement comprend la correction de ladite image acquise en éliminant de celle-ci les valeurs de lumière qui ne correspondent pas aux valeurs de lumière imagées à partir de ladite source ponctuelle.

7. Microscope de la revendication 3 dans lequel ledit microscope comprend des éléments de calibrage comprenant une source ponctuelle de lumière située dans ladite ouverture centrale dudit premier élément optique et dans lequel lesdits moyens pour analyser ladite image acquise comprennent un ordinateur à programme enregistré pour mémoriser les intensités lumineuses dans le plan perpendiculaire à l'axe optique au niveau de chacune des profondeurs prédéterminées.

Fig. 1

$$y^2 = 2R_0 x - ax^2$$

Fig. 2a

Fig. 2b

Fig. 2c

EP 0 845 112 B1

50Y

50X

E' - n   (50Z - n)

E' - 3   (50Z - 3)

E' - 2   (50z - 2)

E' - 1   (50Z - 1)

50Z

Fig. 3

EP 0 845 112 B1

Fig. 4

200 — Establish x,y,z Position of Pinhole target

201 — Acquire 3-D video image at selected image distances

202 — FFT light intensities at selected image distances

203 — Store results

205 — Calculate light intensities inside 100 micron diam. CCD circle; FFT calc'd light intensities

206 — Divide FF T of 3-D points by FF T of calculated light intensities.

207 — Inverse FFT to obtain point spread at position x,y,z

210 — Are all points at selected image distances covered?

Done ← Yes

No →